# EUROPEAN PATENT APPLICATION

(11) **EP 3 016 003 A1**
(43) Date of publication of application: **04.05.2016**
(21) Application number: 14891617.4
(22) Date of filing: 12.12.2014
(51) Int. Cl.: G06F 17/30

(54) **SEARCH METHOD, APPARATUS AND DEVICE AND NON-VOLATILE COMPUTER STORAGE MEDIUM**

(30) Priority: 28.07.2014 CN 201410364667
(71) Applicant: Baidu Online Network Technology (Beijing) Co., Ltd, Beijing 100085 (CN)
(72) Inventor: LIU, Junqi, Beijing 100085 (CN); LI, Kefeng, Beijing 100085 (CN)
(74) Representative: Romano, Giuseppe
(86) International application number: PCT/CN2014/093748
(87) International publication number: WO 2016/015431

(57) **Abstract**

A searching method, a searching apparatus, a device and a non-volatile computer storage medium are provided. According to embodiments of the present disclosure, a source of a search keyword is determined, so as to obtain additional information according to the source of the search keyword, such that a search operation may be executed by using the search keyword and the additional information. Since the execution of the search operation does no longer depend on the search keyword totally, but also relies on the source of the search keyword and the search keyword, the search result may satisfy the real intention of the user basically. Therefore, the problem of data interaction increase between an application and a search engine due to repeated search in the prior art can be avoided, so as to reduce the processing load of the search engine.

## Description

### CROSS-REFERENCE TO RELATED APPLICATION

This application claims priority to Chinese Patent Application Serial No. 201410364667.X, titled "Searching Method and Apparatus" filed with the State Intellectual Property Office of P. R. China on July 28, 2014, the entire content of which is incorporated herein by reference.

### FIELD

Embodiments of the present disclosure generally relate to search technology, and more particularly to a searching method, a searching apparatus, a device and a non-volatile computer storage medium.

### BACKGROUND

A search engine refers to a system that collects information from the Internet by running a particular computer program according to a certain strategy, provides search service for a user after organizing and processing the information, and displays information associated with the search. As National Bureau of Statistics reports, China has over 400 million Internet users, overtaking the U.S. as the country with the largest netizen population, and has over 2 million websites in total. Thus, it is an important issue for Internet enterprises about how to meet users' requirements to the utmost extent through the search service. The user inputs a search keyword in a search box of an application corresponding to a search engine, such that the application sends the search keyword to the search engine. The search engine searches in a database according to the search keyword to obtain a search result matched with the search keyword, and sends the search result back to the application for output.

However, since the execution of the search operation totally depends on the search keyword, such that the search result may not satisfy the real intention of the user. Therefore, the user needs to search repeatedly with the application, which may increase the data interaction between the application and the search engine, and thus increase the processing load of the search engine.

### SUMMARY

Many aspects of the present disclosure provide a searching method, a searching apparatus, a device and a non-volatile computer storage medium, in order to reduce the processing load of a search engine.

A first aspect of the present disclosure provides a searching method. The method includes: obtaining a search keyword input by a user; determining a source of the search keyword; obtaining additional information according to the source of the search keyword; and executing a search operation by using the search keyword and the additional information.

According to the first aspect and any possible implementation, an implementation is further provided. The step of determining the source of the search keyword includes: determining the source of the search keyword according to application attribute information of an application used recently by the user; and/or determining the source of the search keyword according to page content information of an application used currently by the user.

According to the first aspect and any possible implementation, an implementation is further provided. The step of determining the source of the search keyword according to the application attribute information of the application used recently by the user includes: determining M reference applications used recently by the user, M being an integer of greater than or equal to 1; according to the M reference applications, obtaining application attribute information of each reference application thereof; and determining the source of the search keyword according to the application attribute information of the each reference application.

According to the first aspect and any possible implementation, an implementation is further provided. The step of determining the source of the search keyword according to the page content information of the application used currently by the user includes: determining N reference pages used currently, N being an integer of greater than or equal to 1; obtaining page content information of each reference page according to the N reference pages; and determining the source of the search keyword according to the page content information of the each reference page.

According to the first aspect and any possible implementation, an implementation is further provided. The source of the search keyword includes at least one of the following information: a category of the search keyword; and a context of the search keyword.

A second aspect of the present disclosure provides a searching apparatus. The apparatus includes: an obtaining unit configured to obtain a search keyword input by a user; a determining unit configured to determine a source of the search keyword; an analyzing unit configured to obtain additional information according to the source of the search keyword; and a searching unit configured to execute a search operation by using the search keyword and the additional information.

According to the second aspect and any possible implementation, an implementation is further provided. The determining unit is specifically configured to: determine the source of the search keyword according to application attribute information of an application used recently by the user; and/or determine the source of the search keyword according to page content information of an application used currently by the user.

According to the second aspect and any possible implementation, an implementation is further provided. The determining unit is specifically configured to: determine M reference applications used recently by the user, M being an integer of greater than or equal to 1; according to the M reference applications, obtain application attribute information of each reference application thereof; and determine the source of the search keyword according to the application attribute information of the each reference application.

According to the second aspect and any possible implementation, an implementation is further provided. The determining unit is specifically configured to: determine N reference pages used currently, N being an integer of greater than or equal to 1; obtain page content information of each reference page according to the N reference pages; and determine the source of the search keyword according to the page content information of the each reference page.

According to the second aspect and any possible implementation, an implementation is further provided. The source of the search keyword includes at least one of the following information: a category of the search keyword; and a context of the search keyword.

A third aspect of the embodiments of the present disclosure provides a device. The device includes: one or more processors, a memory, and one or more programs stored in the memory and when executed by the one or more processors, configured to obtain a search keyword input by a user; determine a source of the search keyword; obtain additional information according to the source of the search keyword; and execute a search operation by using the search keyword and the additional information.

A fourth aspect of the embodiments of the present disclosure provides a non-volatile computer storage medium. The non-volatile computer storage medium includes one or more programs stored therein. When the one or more programs are executed by a device, the device is configured to: obtain a search keyword input by a user; determine a source of the search keyword; obtain additional information according to the source of the search keyword; and execute a search operation by using the search keyword and the additional information.

According to the above technical solution, in the embodiments of the present disclosure, a source of a search keyword is determined, so as to obtain additional information according to the source of the search keyword, such that a search operation may be executed by using the search keyword and the additional information. Since the execution of the search operation does no longer depend on the search keyword totally, but also relies on the source of the search keyword and the search keyword, the search result may satisfy the real intention of the user basically. Therefore, the problem of data interaction increase between an application and a search engine due to repeated search in the prior art can be avoided, so as to reduce the processing load of the search engine.

Moreover, according to the technical solution provided by the present disclosure, the search operation is executed according to the combination of the search keyword and the source thereof rather than the search keyword alone, so as to enable the search result to satisfy the real intention of the user basically and to improve the validity of the search result.

Moreover, according to the technical solution provided by the present disclosure, the search operation is executed according to the combination of the search keyword and the source thereof rather than the search keyword alone, so as to enable the search result to satisfy the real intention of the user basically and to improve the search efficiency.

### BRIEF DESCRIPTION OF THE DRAWINGS

In order to explain the technical solution of the embodiments of the present disclosure, drawings used in the embodiments will be descried in brief. Evidently, the drawings illustrated in the following present some embodiments of the present disclosure. It is possible for those skilled in the art to acquire other drawings according to these drawings, which does not involve any creative effort.
Fig. 1 is a flow chart of a searching method according to an embodiment of the present disclosure.
Fig. 2 is a schematic diagram of a searching apparatus according to another embodiment of the present disclosure.

### DETAILED DESCRIPTION

The technical solution in the embodiments of the present disclosure will be described clearly and thoroughly with reference to the accompanying drawings to make the purpose, the technical solution and the advantages of the embodiments of the present disclosure more apparent. Obviously, the embodiments described herein are just part of the embodiments of the present disclosure, not including all the embodiments of the present disclosure. Based on the embodiments of the present disclosure, other embodiments acquired without any creative effort belong to the protection scope of the present disclosure.

It shall be noted that the terminal involved in the embodiment of the present disclosure may include but not be limited to a mobile phone, a personal digital assistant (PDA), a wireless handheld device, a wireless netbook, a personal computer, a portable computer, a MP3 player, a MP4 player, etc.

Moreover, as used herein, the term "and/or" represents an association relationship of associated items and contains three kinds of relationship. For example, "A and/or B" may represent the presence of A alone, the presence of A and B together, or the presence of B alone. In addition, the character "/" generally represents an "or" relationship of the associated items.

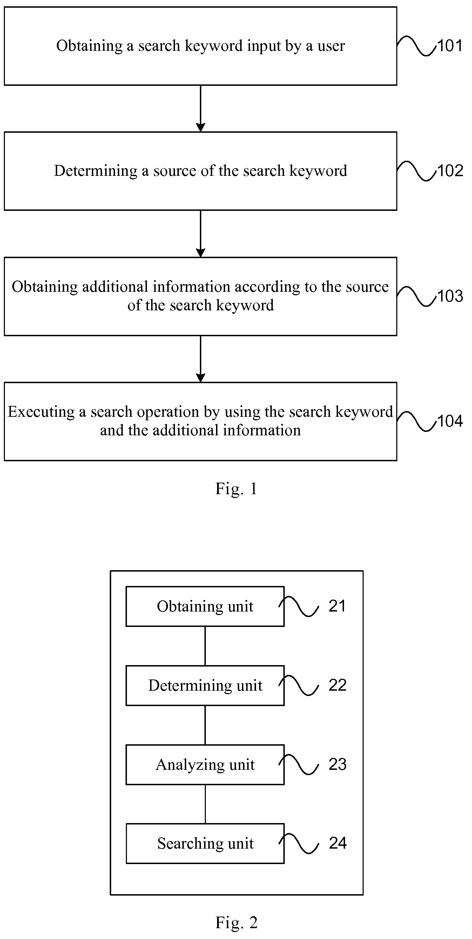

Fig. 1 is a flow chart of a searching method according to an embodiment of the present disclosure.

Step 101: a search keyword input by a user is obtained.

The search keyword is a content input in a search box by a user, and may involve Chinese information, digital information, foreign information (such as English information and German information), or a combination thereof, which will not be limited in this embodiment.

Step 102: a source of the search keyword is determined.

Step 103: additional information is obtained according to the source of the search keyword.

Step 104: a search operation is executed by using the search keyword and the additional information.

It shall be noted that the execution body of step 101 to step 104 may be an application at the local terminal, or may be a search engine at the local terminal or in an Internet server, or be partially an application located at the local terminal and partially a search engine located at the local terminal or in an Internet server, which will not be limited in this embodiment.

It can be understood that the application may be a native App installed at a terminal, or may be a web App of a browser at a terminal, which will not be limited in the embodiment of the present disclosure, as long as it is possible to realize information search to provide the search result in a form of objective existence.

Consequently, the source of the search keyword is determined, so as to obtain the additional information according to the source of the search keyword, such that the search operation may be executed by using the search keyword and the additional information. Since the execution of the search operation does no longer depend on the search keyword totally, but also relies on the source of the search keyword and the search keyword, the search result may satisfy the real intention of the user basically. Therefore, the problem of data interaction increase between an application and a search engine due to repeated search in the prior art can be avoided, so as to reduce the processing load of the search engine.

Alternatively, in a possible implementation of this embodiment, in step 102, the source of the search keyword may be determined according to application attribute information of an application used recently by the user, in which the application attribute information may include but not be limited to at least one of the following items: an application title (like NetEase News, Baidu Map, etc.), an application type (such as news, navigation, etc.) and interface display content (like Word documents, PDF documents, etc.).

Specifically, it is possible to determine M reference applications used recently by the user, M being an integer of greater than or equal to 1, according to the M reference applications, to obtain application attribute information of each reference application thereof, and to determine the source of the search keyword according to the application attribute information of the each reference application.

For example, an ending time Tᵢ, i=1, 2, ..., M' of each candidate application, marked as Aᵢ, of M' candidate applications used recently is obtained, in which M' is an integer of greater than or equal to 1, and a starting time T_{c} of an application used currently is obtained. The difference value between T_{c} and Tᵢ is calculated and marked as ΔTᵢ. If ΔTᵢ is smaller than or equal to a preset time threshold, e.g., 30 seconds, a candidate application Aᵢ corresponding to ΔTᵢ may be used as a reference application. It can be understood that if ΔTᵢ is greater than the preset time threshold, the candidate application Aᵢ corresponding to ΔTᵢ may be ignored without any processing.

It shall be noted that the M reference applications used recently may or may not include the application used currently, which will not be particularly defined in this embodiment.

Alternatively, in a possible implementation of this embodiment, in step 102, the source of the search keyword may be determined according to page content information of an application used currently by the user.

Specifically, it is possible to determine N reference pages used currently, N being an integer of greater than or equal to 1, to obtain page content information of each reference page according to the N reference pages, and to determine the source of the search keyword according to the page content information of the each reference page.

For example, page content information of each candidate page, marked as Pᵢ, of N' candidate pages used currently is obtained. If the page content information of the candidate page Pᵢ includes the search keyword or a synonym of the search keyword, the candidate page Pᵢ may be used as a reference page. It can be understood that if the page content information of the candidate page Pᵢ includes neither the search keyword nor the synonym of the search keyword, the candidate page Pᵢ may be ignored without any processing.

Alternatively, in a possible implementation of this embodiment, by executing step 102, the source of the search keyword may include but not be limited to at least one of the following information: a category of the search keyword, and a context of the search keyword.

The search keyword refers to a character input in the search box, whose content may involve news, websites, names, novels, games, jobs, etc. The search keyword may be classified according to a certain classification standard. Different classification standards may result in different classification results.

For example, the search keyword may be classified, according to the search intention, into navigation keywords, transaction keywords and information keywords.

As another example, the search keyword may be classified, according to the search popularity, into popular keywords, common keywords and unpopular keywords.

Further, regarding each classification result, the search keywords may be further classified according to a finer classification standard.

For instance, the information keywords may be further classified, according to the search intention, into entertainment news, commodity information and professional knowledge.

The context of the search keyword refers to the previous text and/or the following text connected with the search keyword in the text content of the page, i.e. the words before and/or after the search keyword.

Alternatively, in a possible implementation of this embodiment, in step 103, the additional information related to the source of the search keyword may be obtained according to the source of the search keyword.

For example, if the source of the search keyword indicates that the search keyword belongs to the type of entertainment news, the additional information related to the entertainment news may be obtained, like up-to-date or recent entertainment news.

For another example, if the source of the search keyword indicates that the search keyword belongs to the type of professional knowledge, the additional information related to the professional knowledge may be obtained, such as professional knowledge, definitions, meanings, etc.

For another example, if the source of the search keyword is the context of the search keyword, the additional information related to the context of the search keyword may be obtained, such as scene information inferred according to the context and intention information inferred according to the context.

It shall be noted that the implementation of step 104 differs depending on the execution body in this embodiment.

Alternatively, in a possible implementation of this embodiment, in step 104, when located within an application of the local terminal, the execution body may send a search instruction containing the search keyword and the additional information to a search engine, such that the search engine executes a search operation according to the search keyword and the additional information.

Alternatively, in a possible implementation of this embodiment, in step 104, when the execution body is a search engine, the execution body may directly execute the search operation according to the search keyword and the additional information.

For instance, the search engine may use the search keyword and the additional information as a target search keyword, and search in a database to obtain a search result corresponding to the target search keyword.

For another example, the search engine may directly search in the database by using the search keyword to obtain a search result corresponding to the search keyword, and then optimize the search result by using the additional information, such as optimizing the quantity of the search result and the sequence thereof.

In this embodiment, the source of the search keyword is determined, so as to obtain the additional information according to the source of the search keyword, such that the search operation may be executed by using the search keyword and the additional information. Since the execution of the search operation does no longer depend on the search keyword totally, but also relies on the source of the search keyword and the search keyword, the search result may satisfy the real intention of the user basically. Therefore, the problem of data interaction increase between an application and a search engine due to repeated search in the prior art can be avoided, so as to reduce the processing load of the search engine.

Moreover, according to the technical solution provided by the present disclosure, the search operation is executed according to the combination of the search keyword and the source thereof rather than the search keyword alone, so as to enable the search result to satisfy the real intention of the user basically and to improve the validity of the search result.

Moreover, according to the technical solution provided by the present disclosure, the search operation is executed according to the combination of the search keyword and the source thereof rather than the search keyword alone, so as to enable the search result to satisfy the real intention of the user basically and to improve the search efficiency.

It shall be noted that the previous method embodiments are illustrated as a combination of a series of operations for the convenience of description, but those skilled in the art should know that the present disclosure is not limited by the operation sequence described, some steps may be conducted in another sequence or simultaneously. Moreover, those skilled in the art should know that the embodiments described herein are preferable embodiments, in which the operations and modules involved are not necessary for the present disclosure.

The description of each embodiment focuses differently, and part of some embodiment that is not described in detail may refer to relevant description in another embodiment.

Fig. 2 is a schematic diagram of a searching apparatus according to another embodiment of the present disclosure. The searching apparatus according to this embodiment may include an obtaining unit 21, a determining unit 22, an analyzing unit 23 and a searching unit 24. The obtaining unit 21 is configured to obtain a search keyword input by a user; the determining unit 22 is configured to determine a source of the search keyword; the analyzing unit 23 is configured to obtain additional information according to the source of the search keyword; and the searching unit 24 is configured to execute a search operation by using the search keyword and the additional information.

The search keyword is a content input in a search box by a user, and may involve Chinese information, digital information, foreign information (such as English information and German information), or a combination thereof, which will not be limited in this embodiment.

It shall be noted that the searching apparatus according to this embodiment may be an application at the local terminal, or may be a search engine at the local terminal or in an Internet server, or be partially an application located at the local terminal and partially a search engine located at the local terminal or in an Internet server, which will not be limited in this embodiment.

It can be understood that the application may be a native App installed at a terminal, or may be a web App of a browser at a terminal, which will not be limited in the embodiment of the present disclosure, as long as it is possible to realize information search to provide the search result in a form of objective existence.

Consequently, the determining unit determines the source of the search keyword, and then the analyzing unit obtains the additional information according to the source of the search keyword, such that the searching unit is able to execute the search operation by using the search keyword and the additional information. Since the execution of the search operation does no longer depend on the search keyword totally, but also relies on the source of the search keyword and the search keyword, the search result may satisfy the real intention of the user basically. Therefore, the problem of data interaction increase between an application and a search engine due to repeated search in the prior art can be avoided, so as to reduce the processing load of the search engine.

Alternatively, in a possible implementation of this embodiment, the determining unit 22 is specifically configured to determine the source of the search keyword according to application attribute information of an application used recently by the user, in which the application attribute information may include but not be limited to at least one of the following items: an application title (like NetEase News, Baidu Map, etc.), an application type (such as news, navigation, etc.) and interface display content (like Word documents, PDF documents, etc.).

Specifically, it is possible to determine M reference applications used recently by the user, M being an integer of greater than or equal to 1, according to the M reference applications, to obtain application attribute information of each reference application thereof, and to determine the source of the search keyword according to the application attribute information of the each reference application.

For example, an ending time Tᵢ, i=1, 2, ..., M' of each candidate application, marked as Aᵢ, of M' candidate applications used recently is obtained, in which M' is an integer of greater than or equal to 1, and a starting time T_{c} of an application used currently is obtained. The difference value between T_{c} and Tᵢ is calculated and marked as ΔTᵢ. If ΔTᵢ is smaller than or equal to a preset time threshold, e.g., 30 seconds, a candidate application Aᵢ corresponding to ΔTᵢ may be used as a reference application. It can be understood that if ΔTᵢ is greater than the preset time threshold, the candidate application Aᵢ corresponding to ΔTᵢ may be ignored without any processing.

It shall be noted that the M reference applications used recently may or may not include the application used currently, which will not be particularly defined in this embodiment.

Alternatively, in a possible implementation of this embodiment, the determining unit 22 is specifically configured to determine the source of the search keyword according to page content information of an application used currently by the user.

Specifically, it is possible to determine N reference pages used currently, N being an integer of greater than or equal to 1, to obtain page content information of each reference page according to the N reference pages, and to determine the source of the search keyword according to the page content information of the each reference page.

For example, page content information of each candidate page, marked as Pᵢ, of N' candidate pages used currently is obtained. If the page content information of the candidate page Pᵢ includes the search keyword or a synonym of the search keyword, the candidate page Pᵢ may be used as a reference page. It can be understood that if the page content information of the candidate page Pᵢ includes neither the search keyword nor the synonym of the search keyword, the candidate page Pᵢ may be ignored without any processing.

Alternatively, in a possible implementation of this embodiment, the source of the search keyword determined by the determining unit 22 may include but not be limited to at least one of the following information: a category of the search keyword, and a context of the search keyword.

The search keyword refers to a character input in the search box, whose content may involve news, websites, names, novels, games, jobs, etc. The search keyword may be classified according to a certain classification standard. Different classification standards may result in different classification results.

For example, the search keyword may be classified, according to the search intention, into navigation keywords, transaction keywords and information keywords.

As another example, the search keyword may be classified, according to the search popularity, into popular keywords, common keywords and unpopular keywords.

Further, regarding each classification result, the search keywords may be further classified according to a finer classification standard.

For instance, the information keywords may be further classified, according to the search intention, into entertainment news, commodity information and professional knowledge.

The context of the search keyword refers to the previous text and/or the following text connected with the search keyword in the text content of the page, i.e. the words before and/or after the search keyword.

Alternatively, in a possible implementation of this embodiment, the analyzing unit 23 may be specifically configured to obtain the additional information related to the source of the search keyword according to the source of the search keyword.

For example, if the source of the search keyword indicates that the search keyword belongs to the type of entertainment news, the analyzing unit 23 may obtain the additional information related to the entertainment news, like up-to-date or recent entertainment news.

For another example, if the source of the search keyword indicates that the search keyword belongs to the type of professional knowledge, the analyzing unit 23 may obtain the additional information related to the professional knowledge, such as professional knowledge, definitions, meanings, etc.

For another example, if the source of the search keyword is the context of the search keyword, the analyzing unit 23 may obtain the additional information related to the context of the search keyword, such as scene information inferred according to the context and intention information inferred according to the context.

It shall be noted that the functions realized by the searching unit 24 might be different according to different searching apparatuses.

Alternatively, in a possible implementation of this embodiment, when the searching apparatus is located within an application of the local terminal, the searching unit 24 may send a search instruction containing the search keyword and the additional information to a search engine, such that the search engine executes a search operation according to the search keyword and the additional information.

Alternatively, in a possible implementation of this embodiment, when the execution body is a search engine, the searching unit 24 may directly execute the search operation according to the search keyword and the additional information.

For instance, the search engine may use the search keyword and the additional information as a target search keyword, and search in a database to obtain a search result corresponding to the target search keyword.

For another example, the search engine may directly search in the database by using the search keyword to obtain a search result corresponding to the search keyword, and then optimize the search result by using the additional information, such as optimizing the quantity of the search result and the sequence thereof.

In this embodiment, the determining unit determines the source of the search keyword, and then the analyzing unit obtains the additional information according to the source of the search keyword, such that the searching unit is able to execute the search operation by using the search keyword and the additional information. Since the execution of the search operation does no longer depend on the search keyword totally, but also relies on the source of the search keyword and the search keyword, the search result may satisfy the real intention of the user basically. Therefore, the problem of data interaction increase between an application and a search engine due to repeated search in the prior art can be avoided, so as to reduce the processing load of the search engine.

Moreover, according to the technical solution provided by the present disclosure, the search operation is executed according to the combination of the search keyword and the source thereof rather than the search keyword alone, so as to enable the search result to satisfy the real intention of the user basically and to improve the validity of the search result.

Moreover, according to the technical solution provided by the present disclosure, the search operation is executed according to the combination of the search keyword and the source thereof rather than the search keyword alone, so as to enable the search result to satisfy the real intention of the user basically and to improve the search efficiency.

It shall be appreciated that the specific working process of the system, the apparatus and the units may refer to the corresponding part of the above method embodiments for the convenience of description and simplicity, which will not be further elaborated herein.

It shall be understood that the system, the apparatus and the method disclosed in the embodiments of the present disclosure herein may be implemented in other manners. For example, the apparatus embodiment described above is only explanatory; the units are divided by logical functions, so they may be divided in another manner in practice; a plurality of units or modules may be combined or integrated to another system, or some features may be ignored or not be implemented. Moreover, the coupling or direct coupling or communication connection shown or discussed herein may be achieved via some interfaces; the indirect coupling or communication connection between the apparatuses or the units may be in an electrical, mechanical or other form.

The units described as separate components may be or not be physically separated; the components shown as units may be or not be physical units, i.e. located at a position or distributed at a plurality of network units. Part or all of the units may be selected according to the practical requirement to achieve the purpose of the embodiments.

In addition, individual functional units in the embodiments of the present disclosure may be integrated in one processing module or may be separately physically present, or two or more units may be integrated in one module. The integrated module as described above may be achieved in the form of hardware, or may be achieved in the form of hardware and software functional units.

The integrated unit achieved in the form of a software functional unit may be stored in a computer readable storage medium. The software functional unit is stored in a storage medium, including several instructions to make a computer device (such as a PC, a server, or a network device) or a processor to implement partial steps of the method of each embodiment of the present disclosure. The storage medium may include any medium capable of storing program codes, such as a USB flash drive, a mobile hard disk, a read only memory (ROM), a random access memory (RAM), a magnetic disk, or an optical disk.

It shall be finally noted that the above embodiments are only used to illustrate the technical solution of the present disclosure, and are not constructed to limit the present disclosure. Although the present disclosure has been elaborated with reference to the previous embodiments, it would be appreciated by those skilled in the art that the technical solution recited in the embodiments may be amended, or part of the technical features therein may be replaced. These amendments or alternatives do not make the corresponding embodiments depart from spirit and scope of the present disclosure.

## Claims

1. A searching method, comprising:
obtaining a search keyword input by a user;
determining a source of the search keyword;
obtaining additional information according to the source of the search keyword; and
executing a search operation by using the search keyword and the additional information.

2. The method according to claim 1, wherein determining the source of the search keyword comprises:
determining the source of the search keyword according to application attribute information of an application used recently by the user; and/or
determining the source of the search keyword according to page content information of an application used currently by the user.

3. The method according to claim 2, wherein determining the source of the search keyword according to the application attribute information of the application used recently by the user comprises:
determining M reference applications used recently by the user, M being an integer of greater than or equal to 1;
according to the M reference applications, obtaining application attribute information of each reference application thereof; and
determining the source of the search keyword according to the application attribute information of the each reference application.

4. The method according to claim 2 or 3, wherein determining the source of the search keyword according to the page content information of the application used currently by the user comprises:
determining N reference pages used currently by the user, N being an integer of greater than or equal to 1;
obtaining page content information of each reference page according to the N reference pages; and
determining the source of the search keyword according to the page content information of the each reference page.

5. The method according to any one of claims 1 to 4, wherein the source of the search keyword comprises at least one of the following information:
a category of the search keyword; and
a context of the search keyword.

6. A searching apparatus, comprising:
an obtaining unit configured to obtain a search keyword input by a user;
a determining unit configured to determine a source of the search keyword;
an analyzing unit configured to obtain additional information according to the source of the search keyword; and
a searching unit configured to execute a search operation by using the search keyword and the additional information.

7. The apparatus according to claim 6, wherein the determining unit is specifically configured to:
determine the source of the search keyword according to application attribute information of an application used recently by the user; and/or
determine the source of the search keyword according to page content information of an application used currently by the user.

8. The apparatus according to claim 7, wherein the determining unit is specifically configured to:
determine M reference applications used recently by the user, M being an integer of greater than or equal to 1;
according to the M reference applications, obtain application attribute information of each reference application thereof; and
determine the source of the search keyword according to the application attribute information of the each reference application.

9. The apparatus according to claim 7 or 8, wherein the determining unit is specifically configured to:
determine N reference pages used currently by the user, N being an integer of greater than or equal to 1;
obtain page content information of each reference page according to the N reference pages; and
determine the source of the search keyword according to the page content information of the each reference page.

10. The apparatus according to any one of claims 6 to 9, wherein the source of the search keyword comprises at least one of the following information:
a category of the search keyword; and
a context of the search keyword.

11. A device, comprising:
one or more processors;
a memory;
one or more programs stored in the memory and when executed by the one or more processors, configured to:
obtain a search keyword input by a user;
determine a source of the search keyword;
obtain additional information according to the source of the search keyword; and
execute a search operation by using the search keyword and the additional information.

12. A non-volatile computer storage medium, comprising one or more programs, wherein when the one or more programs are executed by a device, the device is configured to:
obtain a search keyword input by a user;
determine a source of the search keyword;
obtain additional information according to the source of the search keyword; and
execute a search operation by using the search keyword and the additional information.
